Europäisches Patentamt

**European Patent Office**

Office européen des brevets

(11) Publication number: **0 129 286**
**B1**

(12) **EUROPEAN PATENT SPECIFICATION**

(45) Date of publication of patent specification: **09.09.87**

(51) Int. Cl.⁴: **H 04 B 1/20,** G 06 F 3/023

(21) Application number: **84200827.8**

(22) Date of filing: **12.06.84**

(54) **Remote control system comprising a control member comprising a display field and position sensing means which are coupled thereto.**

(30) Priority: **13.06.83 NL 8302091**

(43) Date of publication of application:
**27.12.84 Bulletin 84/52**

(45) Publication of the grant of the patent:
**09.09.87 Bulletin 87/37**

(84) Designated Contracting States:
**AT BE CH DE FR GB IT LI SE**

(56) References cited:
**EP-A-0 120 345**
**DE-A-2 346 262**
**DE-A-3 142 861**
**GB-A-1 520 647**
**GB-A-2 081 948**
**GB-A-2 092 347**

(73) Proprietor: **N.V. Philips' Gloeilampenfabrieken**
**Groenewoudseweg 1**
**NL-5621 BA Eindhoven (NL)**

(72) Inventor: **Breukers, Ronald Maurice Arthur**
**Marie**
**c/o INT. OCTROOIBUREAU B.V. Prof. Holstlaan 6**
**NL-5656 AA Eindhoven (NL)**
Inventor: **Hermus, Cornelis Adrianus Christoffel**
**Maria**
**c/o INT. OCTROOIBUREAU B.V. Prof. Holstlaan 6**
**NL-5656 AA Eindhoven (NL)**

(74) Representative: **Strijland, Wilfred et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to a remote control system for the selective control of a plurality of user apparatus, said remote control system comprising a cooperating control member and a control device, said control member comprises a plurality of display fields whereto position sensing means are coupled for sensing a position indicated on the display field by a user and for generating a position signal indicating said sensed position, said position sensing means cooperating with the control device which comprises a data processor unit, said control member also comprising display field control means which has an output which is connected to control inputs of the display fields and an input which serves to receive control signals generated by the data processor unit, said display field control means being provided to enable a control, which indicates an apparatus of said plurality of apparatus, to be displayed in a display field under the control of a first control signal, said display field control means being further provided to display, under the control of a second control signal, a second set of control keys, said first control signal being generated upon activation of the remote control system by a user, said second control signal being generated on the basis of the position signal generated upon indication by the user of a selected control key of the first set, said second set of control keys comprises a group of control keys for the control of the apparatus indicated by the selected control key of the first set, said remote control system furthermore comprising a wireless transmission device for transmitting instructions generated by operation of the selected control keys to the apparatus of said plurality.

A remote control system of this kind is described in the European Patent Application 0 120 345, published 03.10.1984.

A remote control system in accordance with the invention differs from the remote control system of the cited prior art in that the control member comprises only a single display field which is used to display different control keys, instead of a plurality of display fields, wherein each display field can only display one control key.

A first preferred embodiment of a remote control system in accordance with the invention is characterized in that the control member comprises a receiving device, an output of the position sensing means being connected to an input of the transmission device whilst an output of the receiving device is connected to an input of the display field control means, the control device comprising an internal bus for the transport of signals whereto the data processor unit and a further wireless transmitter/receiver are connected, said data processor unit being connected to a memory for the storage of control key information and for generating the control keys of the first and the second set to be displayed, the transmission device and the receiving device on the one side being interactive. The control device and the control member thus represent an independent unit each. The exchange of information between the control device and the control member takes place via their relevant transmitter/receiver. The remote control member now comprises only few components, because the intelligence is present in the control device. The control keys are displayed in that the data processor generates control key information in conjunction with the memory for presentation to the display field control means via the further transmitter/receiver.

In a remote control system in which the control device and the control member form independent units, the control device is preferably connected to an external bus whereto each apparatus of said plurality of apparatus is connected. The control device is thus directly connected to all apparatus.

In a remote control system in which the control device and the control member form independent units, the data processor unit preferably generates a presence signal under the control of said activation of the remote control system in order to check the presence of the apparatus connected to the external bus. Thus, the control keys of the first set are displayed only for the apparatus which are indeed present, and not those for apparatus which are (temporarily) absent.

A further preferred embodiment of a remote control system in accordance with the invention is characterized in that the display field control means is suitable to modify, under the control of a third control signal received from the data processor unit, at least one control key of said group of the second set while mainaining its identity, said third control signal being generated on the basis of a further position signal which is generated by the position sensing means and which indicates the position of the control key of the displayed group of the second set indicated by the user. It can thus be indicated to the user which control key has been activated and, moreover, when a control key is concerned which comprises several positions or a control key with continuous control, which change of position has been made.

The invention will be described in detail hereinafter with reference to the drawings; therein

Figure 1 shows an example of the appearance of a remote control member in accordance with the invention;

Figure 2 shows an example of a first menu of control keys to be displayed on the display field of the remote control member;

Figure 3 shows an example of a second menu of control keys to be displayed on the display field of the remote control member;

Figure 4 shows an example of an embodiment of a remote control of the first type;

Figure 5 illustrates the operation of a remote control of the first type on the basis of a flowchart;

Figure 6 shows the position sensing means and the display field control means;

Figure 7 shows an example of an embodiment of a control member of the second type;

Figure 8 shows the common bus and the apparatus to be controlled which are connected thereto;

Figure 9 shows an embodiment of a control device;

Figure 10 illustrates the operation of a remote control of the second type on the basis of a flowchart.

The control keys of the remote control system to be described hereinafter are formed by "soft keys", that is to say keys which are formed by temporary display on a display field forming part of the control member.

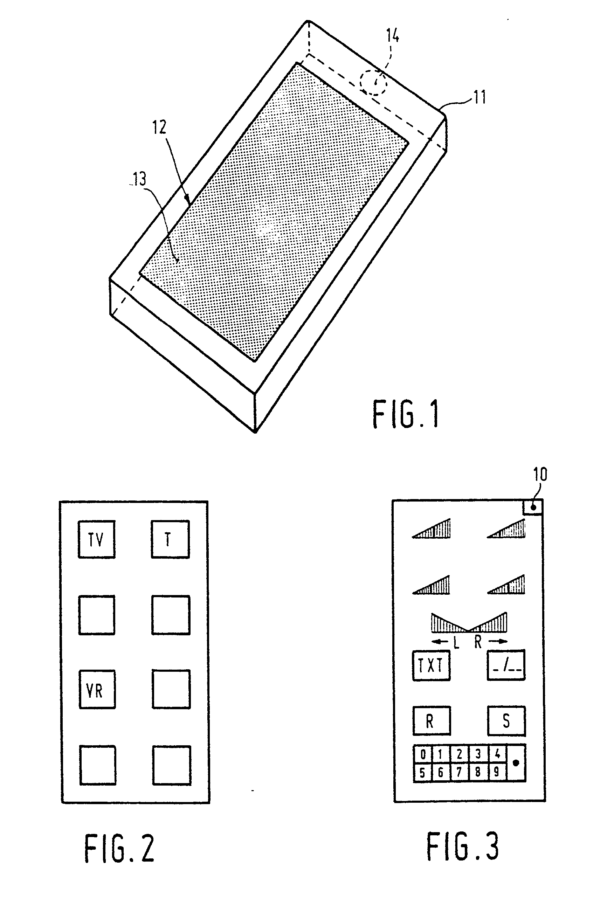

Figure 1 shows an example of the appearance of the control member for carrying out the invention. The control member 11 has the format of a small box and has a low weight. The ergonomics of the control member are such that it easily fits in the palm of the hand of a user. Moreover, at its upper side the control member comprises a display field 12 in which symbols, text and notably control keys are displayed during a control operation. The display field is formed, for example, by a dot matrix LCD (liquid crystal display). The display field is coupled to position sensing means for determining a position indicated on the display field. The position sensing means comprise, for example a sensitive layer, for example a capacitive sensitive layer or a resistance layer. The sensitive layer is transparent and is illustrated in Figure 1 by way of the grid 13. The position sensing means and the display field together constitute a data tablet. Such a data tablet is described, for example in an article by E. L. Walker entitled "Unified read/write panel", published in IBM TDB Vol. 23, No. 1, June 80, pages 278—281.

The remote control system also comprises a transmission device 14 for the transmission of instructions for the apparatus to be controlled. The transmission device comprises, for example a known infrared or ultrasonic transmitter which transmits, for each apparatus to be controlled, using a carrier wave having a carrier frequency which is characteristic of the relevant apparatus.

On display field of the control member keys (soft keys) or controls are displayed with or without a designation; such a key or control is operated by touching the data tablet at the area where the relevant key or control is displayed. Touching is done either by means of a stylus or in that the user indicates the relevant position by a finger, for example as described in U.S. Patent Specification No. 4,293,734.

The remote control system in accordance with the invention is suitable for the remote control of a plurality of apparatus which are preferably apparatus for private consumers. When a user wishes to control an apparatus which is suitable for remote control by means of a remote control in accordance with the invention, a first menu of the various apparatus to be controlled by the remote control is displayed on the display field of the remote control at the beginning of the control operation.

Figure 2 shows an example of such a first menu which comprises a first set of control keys for the selection of one of the apparatus. The various squares in Figure 1 represent the keys for the various apparatus to be remote controlled. For example, there is a key for the television receiver (T.V), a key for the radio receiver (T) and a key for the video tape recorder (VR). The user selects the apparatus to be controlled from the first menu to this end, he touches the key associated with the selected apparatus. After the touching of this key, the first menu is erased on the display field, and subsequently a second menu is displayed; this second menu comprising a group of control keys with the various control possibilities of the apparatus selected by the user.

Figure 3 shows an example of such a second menu the selected apparatus being a television receiver. The triangles in Figure 3 represent controls with a plurality of positions or continuous control, for example controls for tone, volume, contrast and brightness. The key TXT is intended, for example for teletext, the key -/-- for two-digit channel numbers, the key R for a preset position, the key S for stereo, the key formed by two consecutive triangles for the balance between the left and the right speaker, and the bar with digits for the selection of the various stations. For each apparatus to be controlled there is such a group of control keys, all groups forming the elements of a second set of control keys. The key 10 is a reset key which is intended to erase the information displayed on the display field of the control member, after which the first menu is presented again.

For the further description, a distinction will be made between:

— a remote control system of the first type which acts only as a transmission device;

— a remote control system of the second type which acts as a transmission device as well as a receiving device.

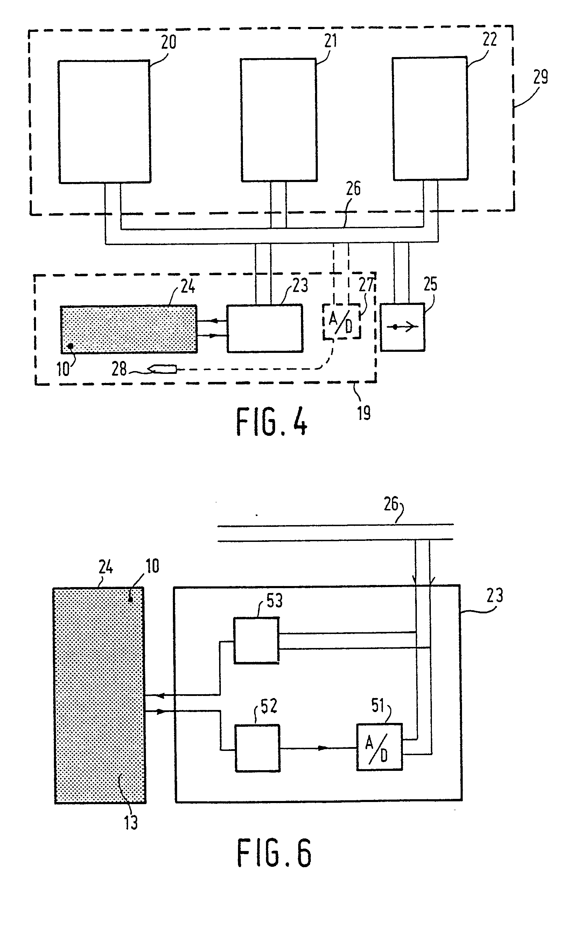

Figure 4 shows an example of an embodiment of a remote control system of the first type. A remote control system of the first type comprises a control device 29 and a control member 19, both of which are connected to a bus 26. The bus 26 is intended for the communication of signals (data + addresses + instructions) between the control member, the control device and the transmission device 25 which is connected to the bus. The control unit 29 comprises a data processor unit 20, for example a microprocessor, a first memory 21, for example a ROM for the storage of information to be displayed and of data necessary for the operation of the remote control, and a second memory 22, for example a RAM which acts as the processing memory for the data processor unit.

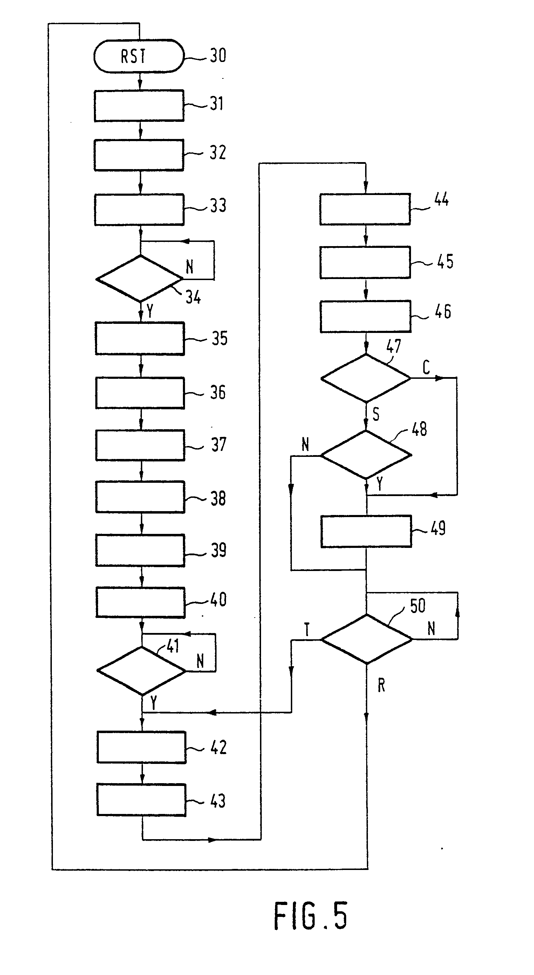

The data processor unit, the first memory and the second memory are connected to the bus 26. The control member 19 comprises the display field 24 with the sensitive layer (not shown) and also the control device 23 which comprises the display field control means and a control circuit of the position sensing means. The elements 23 and 24 together form the data tablet. The transmission device 25 serves for the transmission of the information indicated *via* the data tablet. The transmitter is preferably formed by an infrared transmitter in view of the high information density which can then be achieved. Other types such as, for example an ultrasonic transmitter are also feasible. When the position sensing means comprise a stylus 28, an analog-to-digital converter 27 is connected to the bus 26, said converter being connected to the stylus 28. The operation of the remote control system of the first type as shown in Figure 4 will now be described in detail with reference to the flowchart shown in Figure 5. When a user wishes to control an apparatus which is suitable for remote control by utilizing a control member in accordance with the invention, he will first activate the control member (30). This is done, for example by using a reset key 10 which forms part of this control member or by taking the control member into the hand (touch contacts accommodated in the housing of the control member). Due to the activation of the remote control system, any information displayed on the display field is erased (31). Subsequently, under the control of the data processor unit a first control signal is generated so that the program pointer (32) is set to a first address of the first memory (memory 21, Figure 4). At that first address an instruction is written for the display of a first menu which comprises the first set of control keys, that is to say a list of apparatus to be controlled by the remote control. This list forms part of the information stored in the first memory. Subsequently (33), under the control of the data processor unit the first menu (Figure 2) is displayed on the display field of the control member. The user can then select the apparatus to be controlled from the first menu displayed. During the time required by the user to make a selection, the data processor unit remains in a waiting situation (34). As soon as the user indicates the selected apparatus in the first menu the position sensing means determine (35) the location where the display field is touched. This operation is performed in a customary manner for an LCD data tablet, that is to say by determination of the relevant position coordinates and by storing these coordinates in the second memory (22, Figure 4). On the basis of these position coordinates, the data processor unit recognizes (36) the apparatus selected by the user. In order to do so, the data processor unit checks in which area of the display field said position coordinates are situated and also check which apparatus is displayed within the relevant area. After the data processor unit has recognized the apparatus selected by the user, it determines a second address for the selected apparatus (37). The second address is determined, for example by utilizing the position coordinates determined in step 35 which then act as a second address for the first memory (21, Figure 4). Subsequently, under the control of the data processor unit a second control signal is generated, with the result that the program pointer is set to said second address (38). The second address contains an instruction for the display of a second menu which comprises a group of control keys of the apparatus selected by the user. The latter group also forms part of the information stored in the first memory. Subsequently, under the control of the data processor unit the information present on the display field is erased (39) and the instruction stored at the second address is read. After completion of these operations, the data processor unit executes (40) the instruction stored at the second address, so that the control keys of the apparatus selected by the user are displayed on the display field of the control member. Subsequently, the data processor awaits (41) instructions from the user. As soon as the user has formulated these instructions (touching of the display field), the position sensing means again determine (42) the coordinates of the location where the display field is touched. Subsequently, the data processor unit recognizes (43) the control key indicated by the user. This recognition is performed in the same way as described for step 36. When the data processor unit has recognized the control key selected by the user, it determines a third address (44) for the selected control key, said third address being stored in the second memory. This third address is determined, for example on the basis of an operation executed on the coordinates determined during step 42. Subsequently, under the control of the data processor unit a third control signal is generated with the result that the program pointer is set to said third address (45). The third address contains an instruction for the execution of the function of the control key selected by the user. Such a function is, for example the switching-over to another station; the third address then contains an instruction for controlling the switching-over to the station selected by the user. Under the control of the data processor unit, this instruction is read and executed (46), the transmitter 25 being activated so as to transmit the instruction to the selected apparatus. The data processor unit then checks (47) whether the selected control key is a control key with continuous control, for example, a volume control, or a control key having a switching function, for example a switch for the switching on and off of a noise filter in an audio amplifier. This check is performed, for example on the basis of said third address, either on the basis of all address bits or on the basis of a few address bits of said third address. When the control key selected by the user is a control key having a switching function (S), the data processor unit subsequently checks (48) whether the selected control key requires a special operation as regards the display on the display field of the control member; for example, when the noise filter switch of the audio amplifier was switched on, an indication is given on the display field in the form of an asterisk or a rectangle around the key; this is performed in step 49. However, if no special information is to be displayed (N in step 48), the program proceeds to step 50 under the control of the data processor unit. When the control key selected by the user is a key with continuous control (c), step 49 is reached under the control of the data processor unit. The new position of the control key with continuous control is then displayed on the display field of the control member. Positions of a control key with continuous as shown in Figure 3 (triangles) are displayed, for example, by inserting a number of equidistant strokes in the triangle and by indicating the relevant position by making the stroke in the relevant position heavier. The advantage thereof is that the user can see on the control member which position of the continuous control has been adjusted. The use of strokes also offers the advantage that a simple coupling to the data processor unit is thus obtained. This is because each stroke thus represents a coordinate and the changing of a position is then actually no more than the determination of other coordinates, be it in an absolute or a relative manner with respect to the coordinates of the previous position which are stored in the second memory (step 44). After completion of step 49, the data processor unit awaits (50) further instructions from the user. These instructions may be either the modification (T) of the setting of the apparatus selected in step 34, in which case a jump is made to step 42, or the selection of another apparatus to be controlled by operating the reset key, in which case (R) a jump is made to step 30.

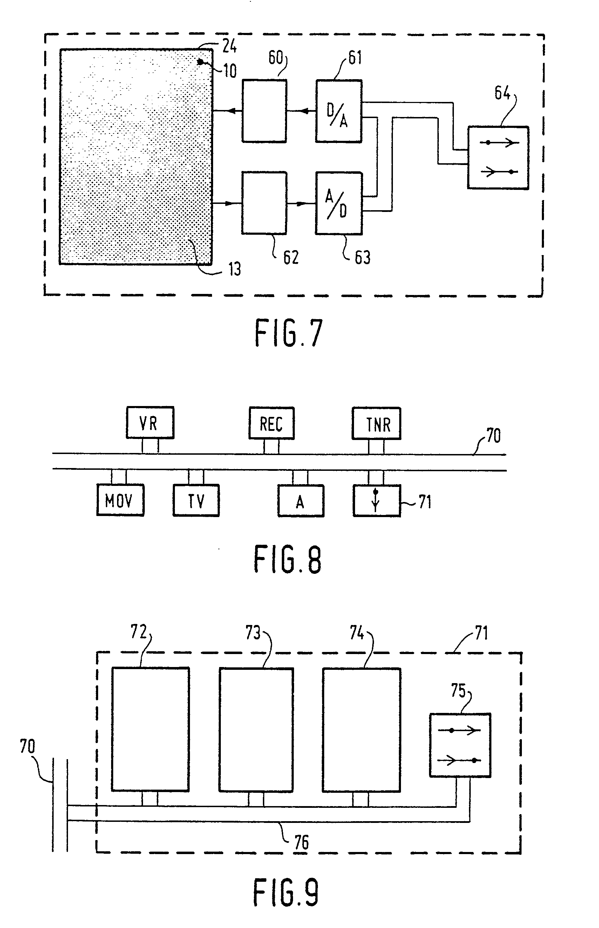

The display as described with reference to step 49 and the preceding operations will now be described in detail with reference to Figure 6 which shows the principal elements of the control device 23 of Figure 4. The control device 23 is connected to the bus 26 whereto also the data processor unit, the first and the second memory are connected. The control device 23 is also connected to the display field 24. Information to be displayed on the display field is fetched, under the control of the data processor unit, from the first or the second memory in the form of a data word (or words) and presented to the display field control means 53 via the bus 26. The data word is displayed on the display field 24 by way of the display field control means. The data processor unit "memorizes" the content and the location of the information displayed on the display field, for example by storing a copy of this information in the second memory. When a user indicates information displayed on the display field, the x-y coordinates of the location where the indicated information is displayed are determined by means of the sensitive layer 13 and the control circuit 52 of the position sensing means. A control circuit 52 of this type is described, for example in U.S. Patent Specification No. 4,293,734. This control circuit supplies an analog coordinate signal which is converted into a digital coordinate signal by means of an analog-to-digital converter 51. The digital coordinate signal is stored in the second memory via the bus 26 and under the control of the data processor unit. By comparison of this digital coordinate signal with the content and the location of the information displayed on the display field and stored in the second memory, the data processor unit determines which information (in this case an apparatus to be controlled or a control key of a selected apparatus) is indicated by the user. When the indicated information concerns a position of a control key with continuous control (determined in step 47 of Figure 6), an information word representing the modified position is generated under the control of the data processor unit, said word being subsequently displayed on the display field. The content of this information word is composed, for example on the basis of said digital coordinate signal.

Alternatively, the second menu is subdivided into various sub-menus. For example, when out of the first menu a cassette deck was selected as the apparatus to be controlled, it may be that the second menu comprises a control key "tape select". The indication of this control key "tape select" results in the display on the display field of a sub-menu of the various types of recording tape (Fe, $Cr.O_2$, metal), so that the user can select the type of tape associated with the cassette used. The display of such a sub-menu is analogous to the display of a second menu. Sub-menus can be used mainly for control keys where the adjusted position is only rarely changed.

A remote control system of the second type (transmission and receiving device) will be described in detail hereinafter. Two classes can be distinguished in this type of remote control:

a) a first class where the remote control device does not have local intelligence;

b) a second class where the remote control device does have local intelligence.

Figure 7 shows an embodiment of a control member of the first class. Such a control member of the first class comprises a transmission/receiving element 64, for example an infrared transmission/receiving element. The transmission/receiving element is connected to a digital-to-analog converter 61 and to an analog-to-digital converter 63. The digital-to-analog converter 61 translates the digital information received into analog information for presentation to the display field control means 60 which in its turn ensures that the data received is displayed on the display field 24. This control member also comprises a sensitive layer 13 as described for a remote control of the first type. This sensitive layer is connected to a control circuit 62 of the position sensing means which is connected to the analog-to-digital converter 63. A control member as shown in Figure 7 is controlled by a control device which communicates with the control member

*via* the transmission/receiving device 64. The control device comprises an interface for all apparatus to be controlled by means of the control member. In the embodiment shown in Figure 8, all apparatus to be controlled are connected to a D²B bus (domestic digital bus). Such a D²B bus is described, for example in the article "Two buses organize the electronic home", published in Electronics, September 22, 1981 (PHN 9737).

In Figure 8 several apparatus are connected to the D²B bus 70 (external bus), for example a video tape recorder (VR), an audio tape recorder (REC), a radio receiver (TNR), a microwave oven (MOV), a television receiver (TV), a display monitor (A) and the control device 71 which comprises a transmission/receiving device which exchanges information with the control member as shown in Figure 7.

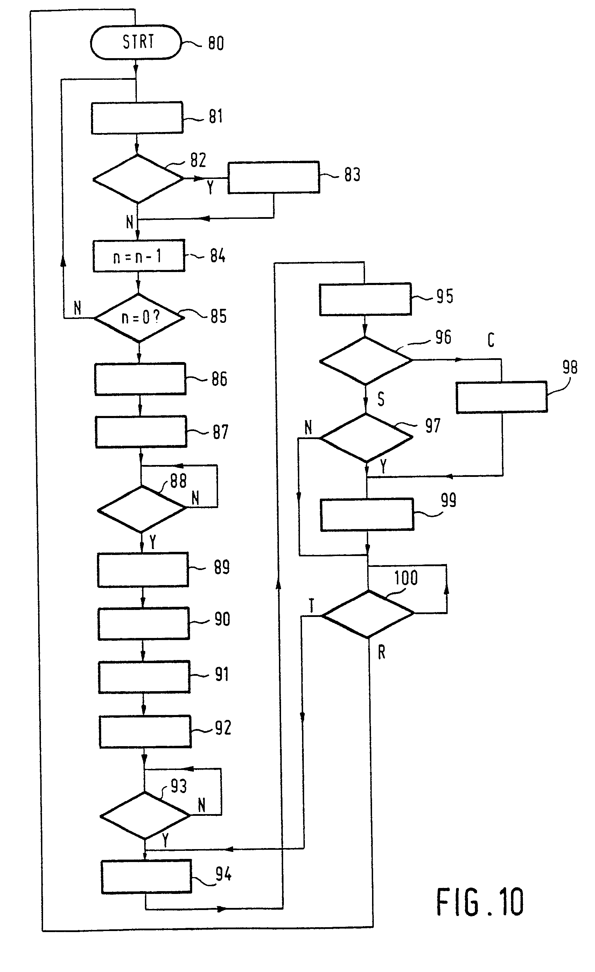

Figure 9 shows an embodiment of such a control device 71. The control device 71 comprises an internal bus 76 whereto a data processor unit 72, a first memory 73 (for example, a ROM), and a second memory 74 (for example, a RAM) are connected. Also connected to the internal bus is a transmission/receiving device 75. The operation of the control member shown in Figure 7 and the control device shown in Figure 9 will be described on the basis of the flowchart of Figure 10 which is referred to hereinafter as the display subroutine.

It is assumed that a user activates the remote control system as shown in Figure 7 (for example, by means of the reset key 10). The transmission/receiving device 64 of the control member transmits a start signal to the control device 71 where it is received by the transmission/receiving device 75. After reception of the start signal by the transmission/receiving device 75, it is presented to the data processor unit 72 which in its turn starts the display subroutine (80). The data processor unit now checks which apparatus are connected to the D²B bus. This check is performed by the data processor unit, for example by transmitting a presence signal (81) to a first one of the plurality of apparatus connected to the D²B bus and by waiting (82) for a response from the said first apparatus. When the first apparatus is present, *i.e.* connected to the D²B bus and in the operative condition, it despatches a presence information (Y) to the data processor unit which memorizes this fact (83), for example by setting a flag for the relevant first apparatus in the second memory 74. When the presence information of the first apparatus has been memorized or when the first apparatus has not returned presence information to the data processor within a predetermined period of time (N) (in which case the flag is not set), the data processor selects (84) a second apparatus from the plurality of apparatus connected to the D²B bus. This is achieved, for example, in that this plurality of apparatus connected to the D²B bus is stored in the first memory, and that the data processor unit successively addresses this plurality. Subsequently, the data processor unit checks (85) whether a presence signal has been applied to each apparatus of said plurality. If each apparatus has not yet had its turn (N), a presence signal is applied to the second apparatus (81) and the steps 82, 83, 84 and 85 are repeated. However, if each apparatus has had its turn (Y), under the control of the data processor unit a first menu is assembled (86) of apparatus which are connected to the D²B bus and which have signalled their presence. The first menu comprises a first set of control keys of the selection of an apparatus from the apparatus present. Subsequently, under the control of a first signal generated by the data processor unit, said first menu is applied, *via* the transmission/receiving device 75, to the control member (87) in order to be received by the transmission/receiving device 64 therein. The first menu received is then displayed on the display field 24 by means of the display field control means 60; the user can then select the apparatus to be controlled. The data processor unit waits (88) until it receives the selection from the user. (The user's selection is applied to the control device *via* the transmission/receiving device 64). Subsequently, the data processor unit checks (89) (for example, on the basis of the coordinates of the indicated position as described for a remote control of the first type) which apparatus has been selected by the user. Subsequently, the data processor unit extracts (90) the control possibilities for the selected apparatus (for example by reading a local memory of the selected apparatus) and composes (91) a second menu on the basis thereof. The second menu comprises a group of control keys for the control of the selected apparatus. Subsequently, the second choice is applied, using the transmission/receiving device 75, to the control member (92) and the data processor unit again awaits (93) the selection by the user. After the user has determined his selection, the data processor unit checks (94) which control key has been selected and subsequently executes (95) the desired operation. Analogous to a remote control of the first type, the data processor unit checks (96) whether the selected control key is a control key with continuous control or a control key with a switching function. When the selected control key is a key with continuous control (C), the data processor unit picks up (98) the new position of this control key and displays it (99) on the display field on the control member. This offers the advantage that the user can now check whether his instruction has been correctly executed. When the selected control key is a key having a switching function (S), the data processor unit checks (97) (analogous to step 48 of Figure 5) whether additional information is to be displayed for the selected control key. If this is the case (Y), this information is displayed (99). If no information is to be displayed (98 N) or after a display step 99, the data processor unit waits until a new instruction has been formulated by the user. This instruction may be a modification (T) of the setting of the apparatus selected in step 88, in which case a jump is made to step 94, or the selection of another apparatus to be controlled by control of the reset key, in which case (R) a jump is made to step 80.

Hereinafter a remote control system of the second type, second class will be described (comprising local intelligence). This remote control system of the second class differs from that of the first class in that the control unit and the control member are connected to a common bus. Their operation is analogous to those of the first class.

**Claims**

1. A remote control system for the selective control of a plurality of user apparatus, said remote control system comprising a cooperating control member and a control device (29; 71), said control member comprising a single display field (12; 24) whereto position sensing means are coupled for sensing a position indicated on the display field by a user and for generating a position signal indicating said sensed position, said position sensing means cooperating with the control device which comprises a data processor unit (20; 72), said control member also comprising display field control means (23; 60, 61, 62, 63) which has an output which is connected to control input of the display field and an input which serves to receive control signals generated by the data processor unit, said display field control means being provided to display on the single display field and under the control of a first control signal, a first set of control keys which comprises control keys for the selection of an apparatus from said plurality; said display field control means being further provided to display, under the control of a second control signal, a second set of control keys, said first control signal being generated upon activation of the remote control system by a user, said second control signal being generated on the basis of the position signal generated upon indication by the user of a selected control key of the first set, said second set of control keys comprising a group of control keys for the control of the apparatus indicated by the selected control key of the first set, said remote control system furthermore comprising a wireless transmission device (25) for transmitting instructions generated by operation of the selected control keys to the apparatus of said plurality.

2. A remote control system as claimed in Claim 1, characterized in that the control member comprises a receiving device (64), an output of the position sensing means being connected to an input of the transmission device (64) whilst an output of the receiving device is connected to an input of the display field control means, the control device comprising an internal bus (76) for the transport of signals whereto the data processor unit and a further wireless transmitter/receiver (75) are connected, said data processor unit being connected to a memory for the storage of control key information and for generating the control keys of the first and the second set to be displayed, the transmission device and the receiving device on the one side and the further transmitter/receiver on the other side being interactive.

3. A remote control system as claimed in Claim 2, characterized in that the control device is connected to an external bus (70) whereto each apparatus of said plurality of apparatus is connected.

4. A remote control system as claimed in Claim 2 or 3, characterized in that under the control of said activation of the remote control system, the data processor unit generates a presence signal in order to check the presence of the apparatus connected to the external bus.

5. A remote control system as claimed in any of the preceding Claims, characterized in that the display field control means is suitable to modify under the control of a third control signal received from the data processor unit, at least one control key of said group of the second set while maintaining its identity, said third control signal being generated on the basis of a further position signal which is generated by the position sensing means and which indicates the position of the control key of the displayed group of the second set indicated by the user.

6. A remote control member for use in a remote control system which is provided for the selective control of a plurality of user apparatus, said remote control member comprising a single display field (12; 24) whereto position sensing means are coupled for sensing a position indicated on the display field by a user and for generating a position signal indicating said sensed position, said control member also comprising display field control means (23; 60, 61, 62, 63) which has an output which is connected to a control input of the display field and an input which serves to receive control signals generated by a data processor unit which is part of a control device cooperating with said remote control member, said display field control means being provided to display on the single display field and under the control of a first control signal, a first set of control keys which comprises control keys for the selection of an apparatus from said plurality, said display field control means being further provided to display, under the control of a second signal, a second set of control keys, said first control signal being generated upon activation of the remote control member by a user, said second control signal being generated on the basis of the position signal generated upon indication by the user of a selected control key of the first set, said second set of control keys comprising a group of control keys for the control of the apparatus indicated by the selected control key of the first set, said remote control member furthermore comprising a wireless transmission device (25) for transmitting instructions generated by operation of the selected control keys to the apparatus of said plurality.

**Patentansprüche**

1. Fernbediensystem für die selektive Bedienung einer Anzahl von Benutzergeräten, wobei dieses Fernbediensystem ein bedienelement mit einer damit zusammenarbeitenden Steuereinrichtung (29; 71) enthält, wobei das Bedienelement ein einziges Anzeigefeld (12; 24) enthält, mit dem Positionsfühler zum Fühlen einer von einem Benutzer auf dem Anzeigefeld angezeigten Position und zum Erzeugen eines die abgetastete Position darstellenden Positionssignals verbunden ist, wobei die Positionsfühler mit der einen Datenprozessor (20, 72) enthaltenden Steuereinrichtung zusammenarbeitet, wobei das Bedienelement ebenfalls ein Anzeigefeldbedienmittel (23; 60, 61, 62, 63) enthält, dessen Ausgang an Steuereingänge der Anzeigefelder angeschlossen ist und dessen Eingang zum Empfangen von im Datenprozessor erzeugten Steuersignalen dient, wobei das Anzeigefeldbedienmittel zum Anzeigen einer ersten Bedientastengruppe am einzigen Anzeigefeld und unter der Steuerung eines ersten Steuersignals vorgesehen ist, wobei diese Bedientastengruppe Bedientasten für die Wahl eines Geräts aus der genannten Anzahl enthält, wobei das Anzeigefeldbedienmittel weiter zum Anzeigen einer zweiten Bedientastengruppe unter der Steuerung eines zweiten Steuersignals vorgesehen ist, wobei das erste Steuersignal durch Aktivierung des Fernbediensystems durch einen Benutzer erzeugt wird, das zweite Steuersignal mit Hilfe des durch Angabe einer ausgewähten Bedientaste der ersten Gruppe erzeugten Positionssignals erzeugt wird, wobei die zweite Bedientastengruppe eine Steuertasten für die Steuerung des mittels der ausgewählten Bedientaste der ersten Bedientastengruppe angegebenen Geräts enthält, dass das Fernbediensystem weiter einen drahtlosen Sender (25) zum Übertragen von Instruktionen auf die Geräte der erwähnten Anzahl enthält, und diese Instruktionen durch Betätigung der ausgewählten Bedientasten erzeugt werden.

2. Fernbediensystem nach Anspruch 1, dadurch gekennzeichnet, dass das Bedienelement einen Empfänger (64) enthält, wobei ein Ausgang der Positionsfühler an einen Eingang des Senders (64) angeschlossen ist, während ein Ausgang des Empfängers an einen Eingang des Anzeigefeldbedienmittels angeschlossen ist, wobei die Steuereinrichtung einen Innenbus (76) für die Übertragung von Signalen enthält, mit dem der Datenprozessor und ein weiterer drahtloser Sender/Empfänger (75) angeschlossen sind, wobei der Datenprozessor mit einem Speicher für die Speicherung von Bedientasteninformation und zum Erzeugen der anzuzeigenden Bedientasten der ersten und zweiten Gruppe verbunden ist, wobei der Sender und der Empfänger an der einen Seite und der weitere Sender/Empfänger an der anderen Seite gegenseitig wirksam sind.

3. Fernbediensystem nach Anspruch 2, dadurch gekennzeichnet, dass die Steuereinrichtung an einen Innenbus (70) angeschlossen ist, mit dem jedes Gerät der genannten Anzahl von Geräten verbunden ist.

4. Fernbediensystem nach Anspruch 2 oder 3, dadurch gekennzeichnet, dass unter der Steuerung der Aktivierung des Fernbediensystems der Datenprozessor ein Anwesenheitssignal erzeugt, um die Verfügbarkeit des an den externen Bus angeschlossenen Geräts zu überprüfen.

5. Fernbediensystem nach einem oder mehreren der vorangehenden Ansprüche, dadurch gekennzeichnet, dass das Anzeigefeldbedienmittel sich zum Ändern zumindest einer Bedientaste dererwähnten Gruppe der zweiten Bedientastengruppe unter der Steuerung eines dritten Steuersignals aus dem Datenprozessor eignet, während seine Identität beibehalten bleibt, wobei das dritte Steuersignal mittels eines weiteren Positionssignals erzeugt wird, das die Positionsfühler erzeugen, und die Position der vom Benutzer gegebenen Bedientaste der angezeigten Gruppe der zweiten Bedientastengruppe angibt.

6. Fernbedienelement zur Verwendung in einem Fernbediensystem, das für die selektive Betätigung einer Anzahl von Benutzergeräten vorgesehen ist, wobei das Fernbedienelement ein einziges Anzeigefeld (12, 24) ebthält, mit dem Positionsfühler zum Fühlen einer am Anzeigefeld von einem Benutzer angegebenen Position und zum Erzeugen eines Positionssignals zum Angeben der abgetasteten Position verbunden sind, wobei das Bedienelement ebenfalls ein Anzeigefeldbedienmittel (23; 60, 61, 62, 63) enthält, dessen Ausgang an einen Steuereingang des Anzeigefelds angeschlossen ist und dessen Eingang zum Empfangen von in einem Datenprozessor erzeugten Steuersignalen dient, und dieser Datenprozessor ein Teil einer Steuereinrichtung ist, die mit dem Fernbedienelement zusammenarbeitet, wobei das Anzeigefeldbedienmittel zum Anzeigen einer ersten Bedientastengruppe am einzigen Anzeigefeld und unter der Steuerung eines ersten Steuersignals vorgesehen ist, wobei die erste Gruppe Bedientasten für die Wahl eines Geräts aus der genannten Anzahl enthält, wobei das Anzeigefeldbedienmittel weiter zum Anzeigen einer zweiten Bedientastengruppe unter der Steuerung eines zweiten Signals vorgesehen ist, wobei das erste Steuersignal durch Aktivierung des Fernbedienelements von einem Benutzer erzeugt wird, wobei das zweite Steuersignal mittels des Positionssignals erzeugt wird, das durch Angabe einer ausgewählten Bedientaste der ersten Bedientastengruppe durch den Benutzer erzeugt wird, wobei die zweite Bedientastengruppe eine Gruppe von Bedientasten für die Betätigung des durch die ausgewählte bedientaste des erster̃ Satzes angegebenen Geräts enthält, wobei das Fernbedienelement weiter einen drahtlosen Sender (25) zum Übertragen von Instruktionen enthält, die durch Betätigung der ausgewählten Bedientasten am Gerät der genannten Anzahl erzeugt werden.

## Revendications

1. Système de télécommande pour la commande sélective de divers appareils d'utilisateurs, ce système de télécommande comprenant un élément de commande et un dispositif de commande coopérants (29; 71), l'élément de commande comprenant un seul écran d'affichage (12; 24) auquel des senseurs de position sont couplés pour détecter une position indiquée sur l'écran d'affichage par un utilisateur et pour générer un signal de position indiquant la position détectée, les senseurs de position coopérant avec le dispositif de commande qui comprend une unité de traitement de données (20, 72), l'élément de commande comprenant aussi un moyen de commande d'écran d'affichage (23; 60, 61, 62, 63) qui comporte une sortie connectée à une entrée de commande de l'écran d'affichage et une entrée destinée à recevoir des signaux de commande générés par l'unité de traitement de données, le moyen de commande d'écran d'affichage étant prévu pour afficher sur l'écran d'affichage unique et sous la commande d'un premier signal de commande, un premier jeu de touches de commande qui comprend des touches de commande pour la sélection d'un appareil parmi les divers appareils, le moyen de commande d'écran d'affichage étant en outre prévu pour afficher, sous la commande d'un second signal de commande, un second jeu de touches de commande, le premier signal de commande étant généré lors de l'activation du système de télécommande par un utilisateur, le second signal de commande étant généré, sur la base du signal de position généré lors de l'indication par l'utilisateur d'une touche de commande sélectionnée du premier jeu, le second jeu de touches de commande comprenant un groupe de touches de commande pour la commande de l'appareil indiqué par la touche de commande sélectionnée du premier jeu, le système de télécommande comprenant, en outre, un dispositif émetteur sans fil (25) pour transmettre à l'appareil sélectionné des instructions générées par l'actionnement des touches de commande sélectionnées.

2. Système de télécommande suivant la revendication 1, caractérisé en ce que l'élément de commande comprend un dispositif récepteur (64), une sortie des senseurs de position étant connectée à une entrée du dispositif émetteur (64), tandis qu'une sortie du dispositif récepteur est connectée à une entrée du moyen de commande d'écran d'affichage, le dispositif de commande comprenant un bus interne (76) pour le transport de signaux auxquels l'unité de traitement de données et un autre émetteur/récepteur sans fil (75) sont connectés, l'unité de traitement de données étant connectée à une mémoire pour le stockage d'informations de touches de commande et pour la génération des touches de commande du premier et du second jeu à afficher, le dispositif émetteur et le dispositif récepteur situés du premier côté, ainsi que l'autre émetteur/récepteur situé de l'autre côté, étant interactifs.

3. Système de télécommande suivant la revendication 2, caractérisé en ce que le dispositif de commande est connecté à un bus externe (70) auquel chacun des divers appareils est connecté.

4. Système de télécommande suivant la revendication 2 ou 3, caractérisé en ce que, sous la commande de l'activation du système de télécommande, l'unité de traitement de données génère un signal de présence afin de vérifier la présence de l'appareil connecté au bus externe.

5. Système de télécommande suivant l'une quelconque des revendications précédentes, caractérisé en ce que le moyen de commande d'écran d'affichage est à même de modifier, sous la commande d'un troisième signal de commande reçu de l'unité de traitement de données, au moins une touche de commande du groupe du second jeu, tout en conservant son identité, le troisième signal de commande étant généré sur la base d'un autre signal de position qui est généré par les senseurs de position et qui indique la position de la touche de commande du groupe affiché du second jeu indiqué par l'utilisateur.

6. Elément de télécommande à utiliser dans un système de télécommande qui est prévu pour la commande sélective de plusieurs appareils d'utilisateurs, l'élément de télécommande comprenant un seul écran d'affichage (12; 24) auquel des senseurs de position sont couplés pour détecter une position indiquée sur l'écran d'affichage par un utilisateur et pour générer un signal de position indiquant la position détectée, l'élément de commande comprenant aussi un moyen de commande d'écran d'affichage (23; 60, 61, 62, 63) qui comporte une sortie connectée à une entrée de commande de l'écran d'affichage et une entrée qui est destinée à recevoir des signaux de commande générés par une unité de traitement de données qui fait partie d'un dispositif de commande coopérant avec l'élément de télécommande, le moyen de commande d'écran d'affichage étant prévu pour afficher sur l'écran d'affichage unique et sous la commande d'un premier signal de commande, un premier jeu de touches de commande qui comprend des touches de commande pour la sélection d'un appareil parmi les divers appareils, le moyen de commande d'écran d'affichage étant en outre prévu pour afficher, sous la commande d'un second signal, un second jeu de touches de commande, le premier signal de commande étant généré lors de l'activation de l'élément de télécommande par un utilisateur, le second signal de commande étant généré, sur la base du signal de position généré lors de l'indication par l'utilisateur d'une touche de commande sélectionnée du premier jeu, le second jeu de touches de commande comprenant un groupe de touches de commande pour la commande de l'appareil indiqué par la touche de commande sélectionnée du premier jeu, l'élément de télécommande comprenant, en outre, un dispositif émetteur sans fil (25) pour transmettre des instructions générées par l'actionnement des touches de commande sélectionnées à l'appareil sélectionné.

FIG.1

FIG.2

FIG.3

FIG. 4

FIG. 6

FIG.5

0 129 286

3

FIG.7

FIG.8

FIG.9

FIG.10